# EUROPÄISCHE PATENTSCHRIFT

(11) **EP 2 223 787 B1**
(45) Veröffentlichungstag und Bekanntmachung des Hinweises auf die Patenterteilung: **30.05.2012**
(21) Anmeldenummer: 10001179.0
(22) Anmeldetag: 05.02.2010
(51) Int. Cl.: B29C 33/04

(54) **Formschalenanordnung**
Casting die assembly
Agencement d'une coque

(30) Priorität: 27.02.2009 DE 102009010916
(43) Veröffentlichungstag der Anmeldung: 01.09.2010
(73) Patentinhaber: Galvanoform Gesellschaft für Galvanoplastik mbH, 77933 Lahr (DE)
(72) Erfinder: Obergföll, Jürgen, 77933 Lahr (DE); Feldmer, Christian, 77933 Lahr (DE)
(74) Vertreter: RACKETTE Partnerschaft Patentanwälte

(56) Entgegenhaltungen:
- WO-A1-2006/061089
- WO-A1-2008/041556
- JP-U- 3 039 513

## Beschreibung

Die Erfindung betrifft eine Formschale gemäß dem Oberbegriff des Patentanspruchs 1.

Eine derartige Formschalenanordnung ist aus JP 03 039 513 U bekannt. Die vorbekannte Formschalenanordnung verfügt über eine Formschale, die eine Formseite und eine der Formseite gegenüber liegende Rückseite aufweist. An der Rückseite ist mit Klemmmitteln eine Anzahl von Rohren wenigstens eines Leitungssystems zum Temperieren der Formschale angebracht. Über den Rohren sowie über sich zwischen den Rohren erstreckenden Bereichen der Rückseite liegt als Material eine gegenüber dem Querschnitt der Rohre dünne Deckschicht aus Lötmaterial.

Eine weitere Formschalenanordnung ist aus DE 199 60 220 A1 bekannt. Diese vorbekannte Formschalenanordnung verfügt über eine Formschale mit einer Formseite und mit einer der Formseite gegenüberliegenden Rückseite. An der Rückseite ist eine Anzahl von Rohren eines Leitungssystems angebracht, die zum Temperieren der Formschale dienen. Die Rohre sind in eine an der Rückseite der Formschale angrenzende Stützform eingebettet.

Aus WO 2006/061089 A1 ist eine Formschalenanordnung mit einer Formschale mit einer Formseite und mit einer der Formseite gegenüberliegenden Rückseite bekannt, an der eine Anzahl von Rohren eines Leitungssystems zum Temperieren der Formschale angebracht ist. Bei dieser Formschale sind die Rohre über Lötnähte an der Rückseite befestigt.

Der Erfindung liegt die Aufgabe zugrunde, eine Formschalenanordnung der eingangs genannten Art anzugeben, die sich bei einem verhältnismäßig einfachen Aufbau effizient bei Einsatzbedingungen mit Temperaturzyklen mit einer verhältnismäßig großen Amplitude und/oder mit einer relativ kurzen Temperaturwechselfrequenz verwenden lässt.

Diese Aufgabe wird bei einer Formschalenanordnung der eingangs genannten Art erfindungsgemäß mit den kennzeichnenden Merkmalen des Patentanspruchs 1 gelöst.

Dadurch, dass bei der erfindungsgemäßen Formschalenanordnung die wenig aufwändig mit Klemmmitteln fixierten Rohre und freiliegende Bereiche der Rückseite mit einer verhältnismäßig dünnen, aus Silikonkautschuk und Metallteilchen mit einem Anteil von höchstens 5 Gewichtsprozent gebildeten und daher gut wärmleitfähigen Deckschicht bedeckt sind, ist zum einen ein guter Wärmeübergang zwischen der Formschale und den unter Umständen abschnittsweise auch einen kleinen Abstand von der Rückseite der Formschale aufweisenden Rohren sichergestellt und zum anderen eine verhältnismäßig geringe thermische Trägheit erzielt. Dadurch lassen sich ausgeprägte und verhältnismäßig kurze Temperaturzyklen realisieren.

Weitere zweckmäßige Ausgestaltungen der Erfindung ergeben sich aus den Unteransprüchen.

Weitere zweckmäßige Ausgestaltungen und Vorteile der Erfindung sind Gegenstand der nachfolgenden Beschreibung von Ausführungsbeispielen mit Bezug auf die Figuren der Zeichnung. Es zeigen:
- Fig. 1: ein Ausführungsbeispiel einer erfindungsgemäßen Form- schale mit Blick auf eine mit Rohren von zwei Leitungs- systemen belegten Rückseite,
- Fig. 2: in einer ausschnittsweisen Seitenansicht das Ausführungs- beispiel gemäß Fig. 1,
- Fig. 3: in einer ausschnittsweisen Seitenansicht eine auf eine Rückseite mit Rohren wenigstens eines Leitungssystems belegte Formschale mit Klemmschellen zum Befestigen der Rohre,
- Fig. 4: die Anordnung gemäß Fig. 3 mit beidseitig einer Anzahl von Rohren angeordneten Füllmasse,
- Fig. 5: die Anordnung gemäß Fig. 4 mit einer über die Rohre und die Füllmasse gelegten Deckschicht zum Fertigstellen einer erfindungsgemäßen Formschalenanordnung,
- Fig. 6: die Anordnung gemäß Fig. 5 mit einer auf der Deckschicht aufgebrachten Isolationsschicht,
- Fig. 7: in einer ausschnittsweisen Seitenansicht eine Formschale mit einem im Bereich einer Stufe angeordneten Rohr,
- Fig. 8: die Anordnung gemäß Fig. 7 mit einer in zwischen dem Rohr und der Formschale ausgebildeten Freibereichen ein- gebrachten Füllmasse,
- Fig. 9: die Anordnung gemäß Fig. 8 mit einer auf die Anordnung gemäß Fig. 8 aufgebrachten Deckschicht zum Fertigstellen einer erfindungsgemäßen Formschalenanordnung,
- Fig. 10: die Anordnung gemäß Fig. 9 mit einer auf die Deckschicht aufgebrachten Isolationsschicht,
- Fig. 11: in einer ausschnittsweisen Seitenansicht eine Formschale mit Rohren wenigstens eines Leitungssystems, wobei die Formschale eine Rippennut aufweist, an deren offenen Sei- te ein Rohr angeordnet ist,
- Fig. 12: die Anordnung gemäß Fig. 11 mit einer die Rippennut bis zu dem Rohr auffüllenden ersten Füllmasse,
- Fig. 13: die Anordnung gemäß Fig. 12 mit einer zweiten Füllmasse, die bei einigen Rohren zwischen der Rückseite der Form- schale zugewandten Wandbereichen und der Rückseite der Formschale angeordnet ist,
- Fig. 14: die Anordnung gemäß Fig. 13 mit einer Deckschicht zum Fertigstellen einer erfindungsgemäßen Formschalenanord- nung und
- Fig. 15: die Anordnung gemäß Fig. 14 mit einer auf die Deckschicht aufgebrachten Isolationsschicht.

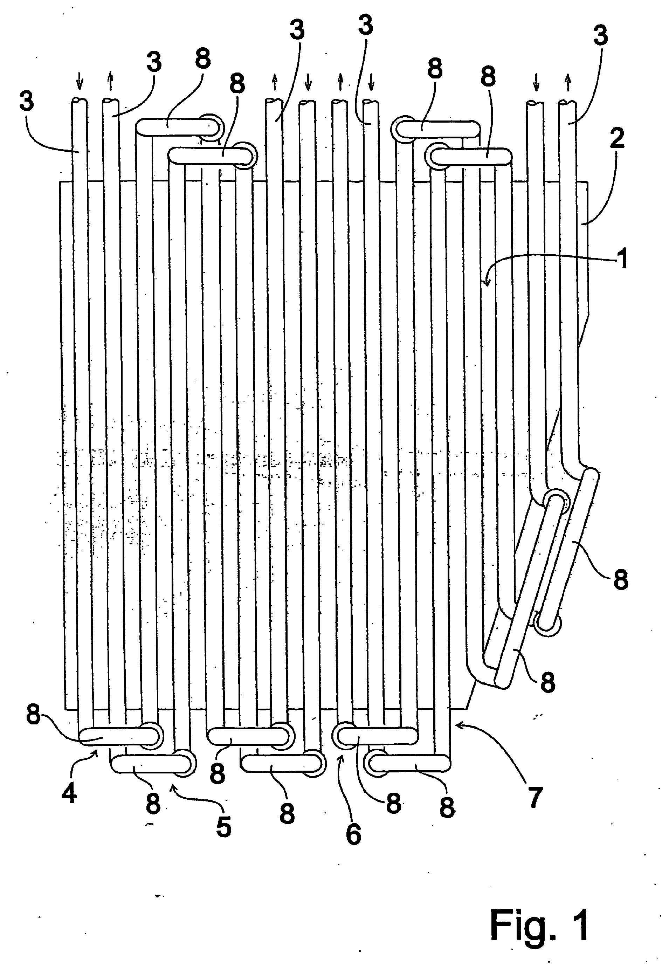

Fig. 1 zeigt eine Formschalenanordnung mit Blick auf eine Rückseite 1 einer galvanisch hergestellten Formschale 2. Auf der Formschale 2 sind eine Anzahl von parallel zueinander ausgerichteten Rohren 3 eines ersten Leitungssystems 4, eines zweiten Leitungssystems 5, eines dritten Leitungssystems 6 und eines vierten Leitungssystem 7 angeordnet, wobei die zweckmäßigerweise als einfach biegsame Wellrohre ausgebildeten Rohre 3 von Paaren von Leitungssystemen 4, 5, 6, 7 in einem Abstand von etwa 4 Zentimeter alternierend angeordnet sind, so dass die Rohre 3 eines Leitungssystems 4, 5, 6, 7 einen Abstand von etwa 8 Zentimeter voneinander aufweisen. Die Rohre 3 der Leitungssysteme 4, 5, 6, 7 stehen randseitig über die Formschale 2 über, wobei Rohre eines Leitungssystems 4, 5, 6, 7 teilweise über Umlenkbögen 8 miteinander verbunden sind.

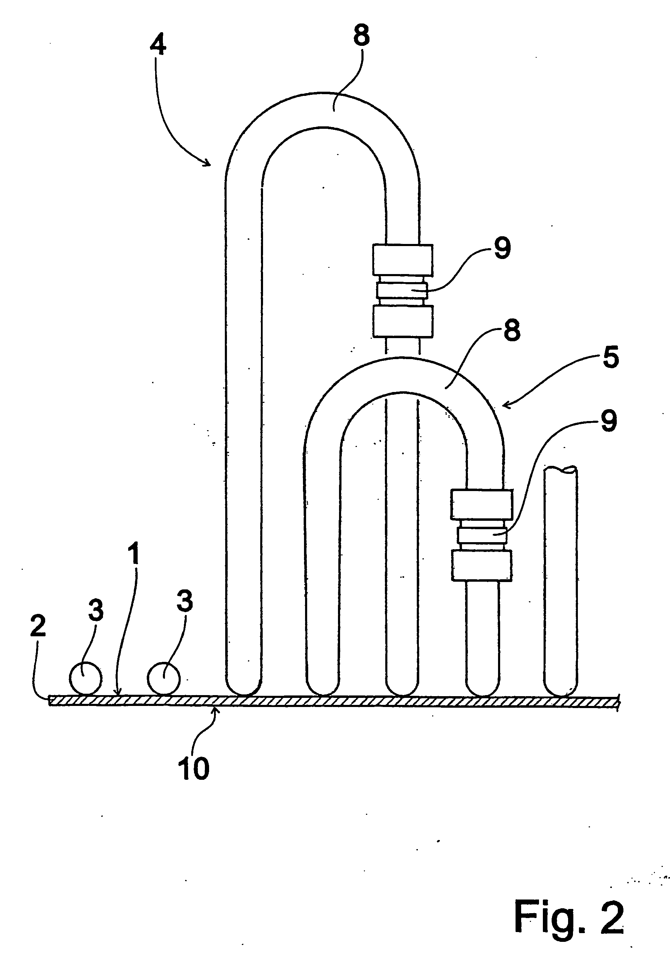

Fig. 2 zeigt die Formschalenanordnung gemäß Fig. 1 in einer ausschnittsweisen Seitenansicht mit Blick auf Umlenkbögen 8 des ersten Leitungssystems 4 und des zweiten Leitungssystems 5. Aus Fig. 2 ist ersichtlich, dass die Umlenkbögen 8 mit einem Biegeradius von hier etwa 4 Zentimeter ausgebildet sind, der für Wellrohre mit einem Durchmesser von etwa 1,75 Zentimeter noch zu bewerkstelligen ist. Weiterhin lässt sich Fig. 2 entnehmen, dass die Rohre 3 eines Leitungssystems 4, 5, 6, 7 über im Bereich der Umlenkbögen 8 angeordnete Verbindungsmuffen 9 miteinander verbunden sind, die somit außerhalb der Formschale 2 liegen und für Wartungs- oder Reparaturarbeiten verhältnismäßig einfach zugänglich sind.

Schließlich lässt Fig. 2 erkennen, dass eine der Rückseite 1 gegenüberliegende Formseite 10 der Formschale 2 gänzlich freiliegend ist.

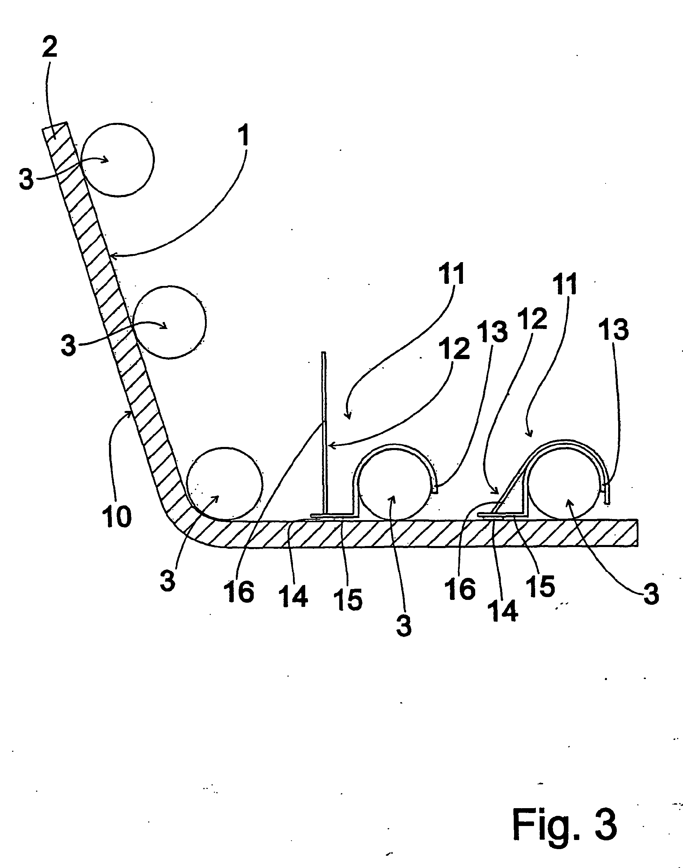

Fig. 3 zeigt in einer ausschnittsweisen Seitenansicht eine Formschale 2 mit einer freiliegenden Formseite 10 und einer der Formseite 10 gegenüberliegenden Rückseite 1, auf die eine Anzahl von Rohren 3 aufgelegt sind. Vor Aufbringen der Rohre 3 ist die Formschale 2 zum Beseitigen von Staub und Fett grob gereinigt worden. Zum schnellen und mechanisch einfach zu bewerkstelligenden Befestigen der Rohre 3 an der Formschale 2 dienen Klemmmittel 11, die bei diesem Ausführungsbeispiel jeweils aus einem Nagel 12 und einer abschnittsweisen halbrunden Schelle 13 aufgebaut sind. Die Köpfe 14 der Nägel 12 sind über Punktschweißen mit der Rückseite 1 der. Formschale 2 verbunden, während ein Flachabschnitt 15 der Schellen 13 eines Klemmmittels 11 auf einen Schaft 16 des betreffenden Nagels 12 bis zu dessen Kopf 14 aufgeschoben und dort mit dem Nagel 12 verbunden ist. Zum Sichern der Schellen 13 gegen Aufbiegen sowie zum Versenken der Schäfte 16 sind die Nägel 12 in einer Endmontagestellung um die Schellen 13 herum gebogen, wie es bei der in der Darstellung gemäß Fig. 3 bei dem am weitesten rechts liegenden Klemmmittel 11 dargestellt ist.

Nach Befestigen der Rohre 3 an der Rückseite 1 der Formschale 2 sind die Formschale 2 und die Rohre 3 durch Strahlen mit Trockeneis fettfrei gereinigt worden. Anschließend wurde auf die Rückseite 1 der Formschale 2 und die Rohre 3 eine Grundierung als Haftvermittler wie beispielsweise WACKER GRUNDIERUNG G 790 mit einem Auftrag von etwa 50 Milliliter pro Quadratmeter aufgetragen. Anschließend erfolgte ein Ablüften von etwa 30 Minuten.

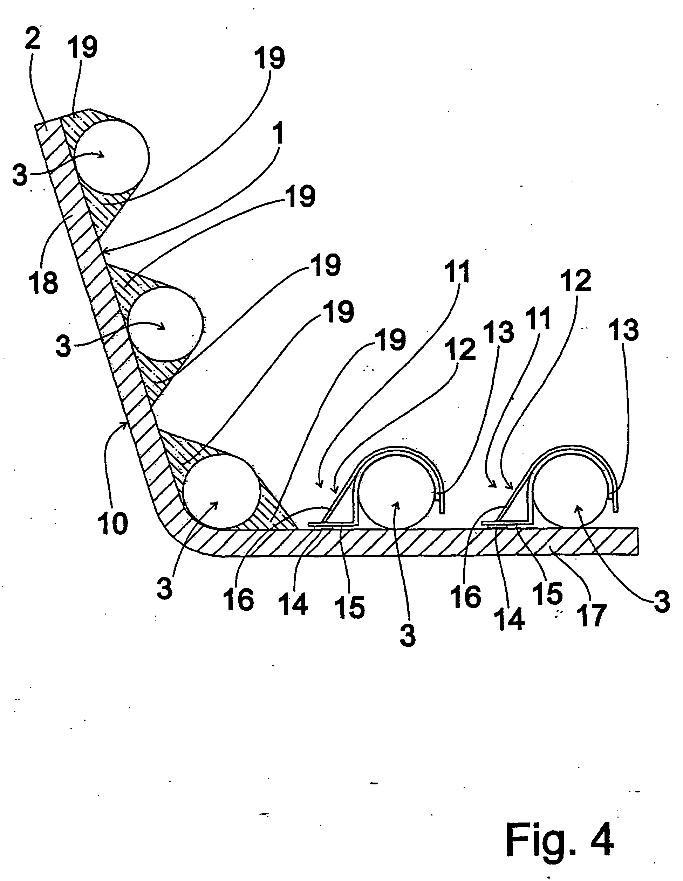

Fig. 4 zeigt die Anordnung gemäß Fig. 3 mit den dargestellten Klemmmitteln 11 in der Endmontagestellung und in einer Anord-nung, in der ein erster Flachabschnitt 17 horizontal und ein zweiter Flachabschnitt 18 gegenüber der Horizontalen verhältnismäßig stark geneigt ist. Aus Fig. 4 ist ersichtlich, dass die im Bereich des gegenüber der Horizontalen schräg gestellten zweiten Flachabschnittes 18 angeordneten Rohre 3 beidseitig mit einer Füllmasse 19 unterfüttert sind, die böschungsartig den Freiraum zwischen den der Rückseite 1 zugewandten Wandbereichen der Rohre 3 und der Rückseite 1 der Formschale 2 auffüllt, wobei bei dem in Fig. 4 dargestellten Bereich des Ausführungsbeispiels zwischen benachbarten Füllmassen 19 die Rückseite 1 der Formschale 2 noch freie Bereiche aufweist.

Es versteht sich, dass bei anderen, nicht dargestellten Bereichen die Füllmassen 19 die Rückseite 1 wenigstens abschnittsweise auch vollständig mit unterschiedlicher Dicke bedecken können.

Die Füllmasse 19 weist mit einem Anteil von 65 Gewichtsprozent bis 75 Gewichtsprozent, vorzugsweise vorn etwa 70 Gewichtsprozent, einen Silikonkautschuk beispielsweise des Typs WACKER ELASTOSIL^{®} RT 675 mit einer jeweils hälftigen Zusammensetzung von RT 675 A und RT 675 B und einen Anteil zwischen 25 Gewichtsprozent und 35 Gewichtsprozent, vorzugsweise von etwa 30 Gewichtsprozent, aus Metallteilchen wie Aluminiumteilchen mit Teilchengrößen von 400 Mikrometer bis 800 Mikrometer auf. Dadurch verfügt die Füllmasse 19 über eine hochviskose, knetartige Konsistenz und weist aufgrund der verhältnismäßig hohen Wärmeleitfähigkeit des verwendeten Silikonkautschuks, bei WACKER ELASTOSIL^{®} RT 675 etwa 1,2 Watt / (Meter · Kelvin) und naturgemäß des Aluminiumpulvers von 237 Watt / (Meter · Kelvin) eine insgesamt sehr hohe Wärmeleitfähigkeit auf.

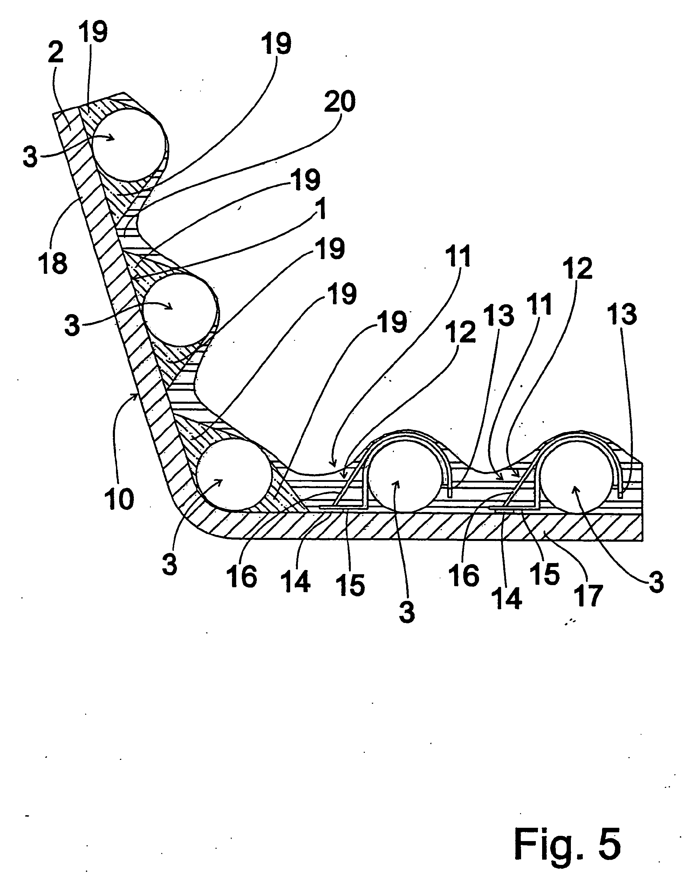

Fig. 5 zeigt die Anordnung gemäß Fig. 4, wobei nunmehr über die Rohre 3, die Füllmassen 19 und die Rückseite 1 der Formschale 2 eine Deckschicht 20 beispielsweise durch wiederholtes Bestreichen aufgebracht worden ist. Die Deckschicht 20 besteht im Wesentlichen aus einem Anteil von wenigstens 95 Gewichtsprozent WACKER ELASTOSIL^{®} RT 675 mit gleichen Bestandteilen von RT 675 A und RT 675 B, wobei die Deckschicht 20 bis zu einem Anteil von 5 Gewichtsprozent Aluminiumteilchen mit einer Teilchengrößen von 400 Mikrometer bis 800 Mikrometer aufweist. Dadurch ist die Deckschicht 20 nach der Konfektionierung noch fließfähig und wird vorzugsweise an dem abfallenden zweiten Flachabschnitt 18 aufgebracht sowie unter Zuhilfenahme eines Pinsels bis zur Verfestigung verteilt, um eine geschlossene Überdeckung der Rohre 3, der böschungsartigen Füllmassen 19 und den freien Bereichen der Rückseite 1 der Formschale 2 zu erzielen. Dabei ist durch die kaum fließfähigen böschungsartigen Füllmassen 19 sichergestellt, dass auch die in den steileren Bereichen der Formschale 2 angeordneten Rohre 3 auch bei einem schnellen Auftrag der Deckschicht 20 einen guten thermischen Kontakt zu der Formschale 2 haben, was bei alleiniger Verwendung der Deckschicht 20 einen sehr sorgfältigen, dabei aber relativ zeitaufwändigen Auftrag der Deckschicht 20 erfordert, um ein bis zum Aushärten andauererndes Herabfließen der Deckschicht 20 zu verhindern. Bevorzugt werden die Bereiche zwischen den Rohren 3 bis etwa zur Hälfte des Außendurchmessers der Rohre 3 aufgefüllt.

Nunmehr ist die erfindungsgemäße Formschalenanordnung fertiggestellt. Die Rohre 3 sind vollständig in ein sehr wärmeleitfähiges Material, bestehend aus den Füllmassen 19 und der Deckschicht 20, eingebettet, wobei das Material einen vollflächigen Kontakt mit der Rückseite 1 der Formschale 2 hat und somit einen guten Wärmeübergang zwischen der Formschale 2 und den Rohren 3 sicherstellt, auch wenn Rohre 3 wenigstens abschnittsweise einen kleinen Abstand von der Rückseite 1 der Formschale 2 aufweisen. Weiterhin sind bei einer Ausgestaltung der Rohre 3 als Wellrohre die von der Rückseite 1 wegweisend gewölbten Bereiche verfüllt. Dadurch wird ein sehr guter Wärmeübergang zwischen der Formschale 2 und den Rohren 3 bei einer verhältnismäßig geringen thermischen Masse erzielt.

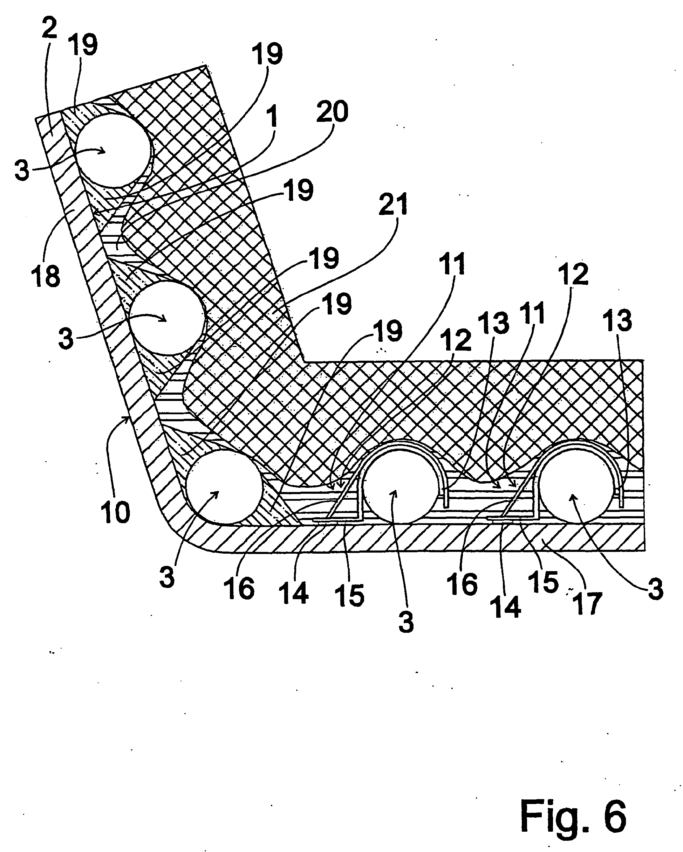

Fig. 6 zeigt die Anordnung gemäß Fig. 5, bei der zur thermischen Isolierung auf die Deckschicht 20 eine Isolationsschicht 21 aus aluminiumkaschierter Steinwolle gelegt ist.

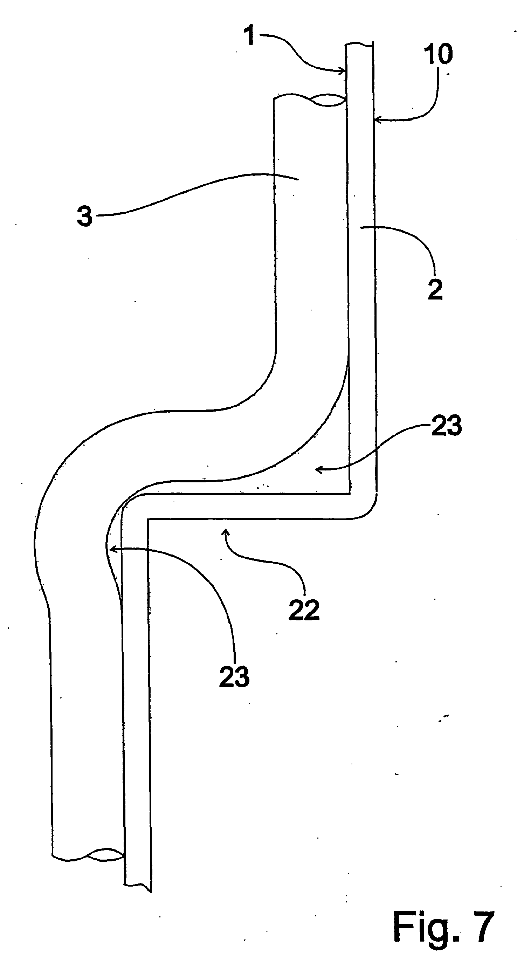

Fig. 7 zeigt in einer ausschnittsweisen Seitenansicht eine Formschale 2, die entsprechend dem vorangehend erläuterten Ausführungsbeispiel eine Rückseite 1 und eine der Rückseite 1 gegenüberliegende Formseite 10 aufweist. Der in Fig. 7 dargestellte Ausschnitt der Formschale 2 verfügt über eine hier rechtwinklig ausgebildete Stufe 22, über die unter Ausbilden von Freiräumen 23 ein zweckmäßigerweise als Wellrohr ausgebildetes Rohr 3 eines Leitungssystems gelegt ist. Das Rohr 3 liegt außerhalb der Freiräume 23 an der Rückseite 1 der Formschale 2 auf und ist durch in Fig. 7 nicht dargestellte, entsprechend den Klemmmitteln 11 bei dem Ausführungsbeispiel gemäß Fig. 3 bis Fig. 6 durch mechanische Klemmung wirkende Klemmmittel an der Formschale 2 befestigt.

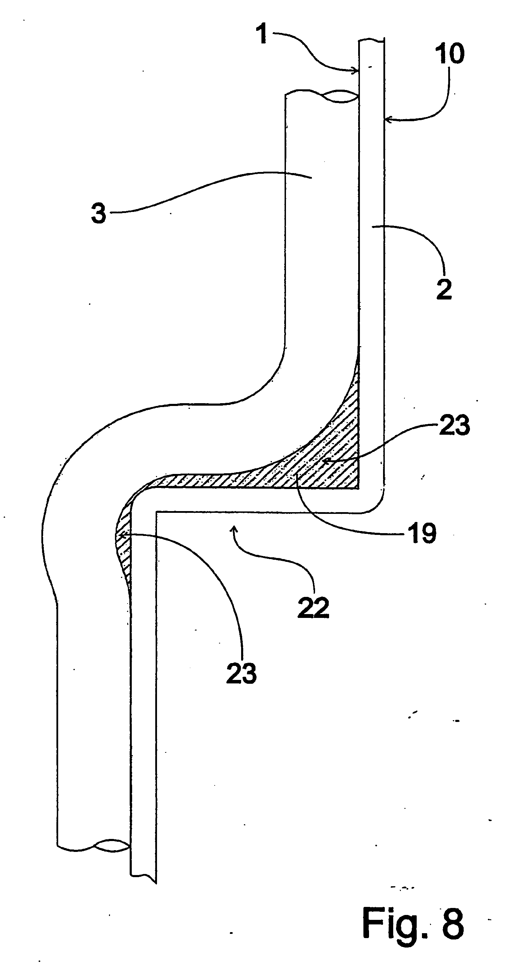

Fig. 8 zeigt die Anordnung der Formschale 2 und des Rohrs 3 gemäß Fig. 7, wobei die Freiräume nach Durchführen der anhand des Ausführungsbeispiels gemäß Fig. 3 bis Fig. 6 erläuterten Vorbehandlungsschritte mit einer Füllmasse 19 ausgefüllt sind, die entsprechend dem Ausführungsbeispiel gemäß Fig. 3 bis Fig. 6 zusammengesetzt ist. Dadurch ist sichergestellt, dass auch im Bereich der Stufe 22 zwischen der Formschale 2 und dem betreffenden Rohr 3 ein guter thermischer Kontakt vorhanden ist.

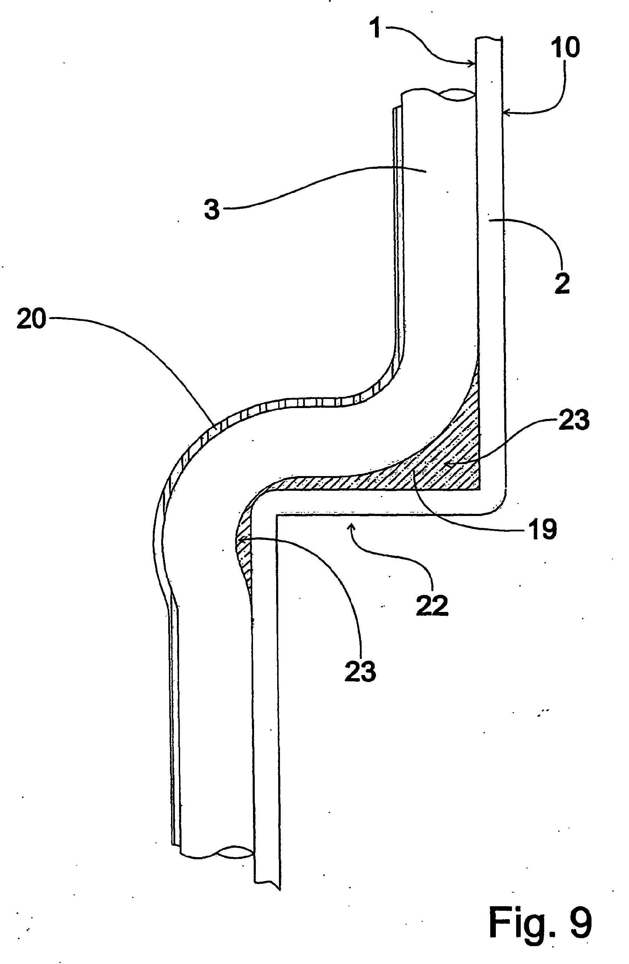

Fig. 9 zeigt die Anordnung gemäß Fig. 8, bei der nunmehr auf die Formschale 2 und auf das Rohr 3 eine Deckschicht 20 aufgebracht worden ist, die entsprechend der Deckschicht 20 des Ausführung-beispiels gemäß Fig. 3 bis Fig. 6 zusammengesetzt ist. Damit ist bei der erfindungsgemäßen Formschalenanordnung gemäß Fig. 9 ebenfalls ein guter thermischer Kontakt zwischen dem beziehungsweise jedem Rohr 3 und der Formschale 2 auch außerhalb der mit der Füllmasse 19 gefüllten Freiräume 23 sichergestellt, da nunmehr auch verhältnismäßig kleine Spalte zwischen der Formschale 2 und dem oder jedem Rohr 3 mit der hierfür ausreichend fließfähigen und sehr gut wärmeleitenden Deckschicht 20 aufgefüllt sind.

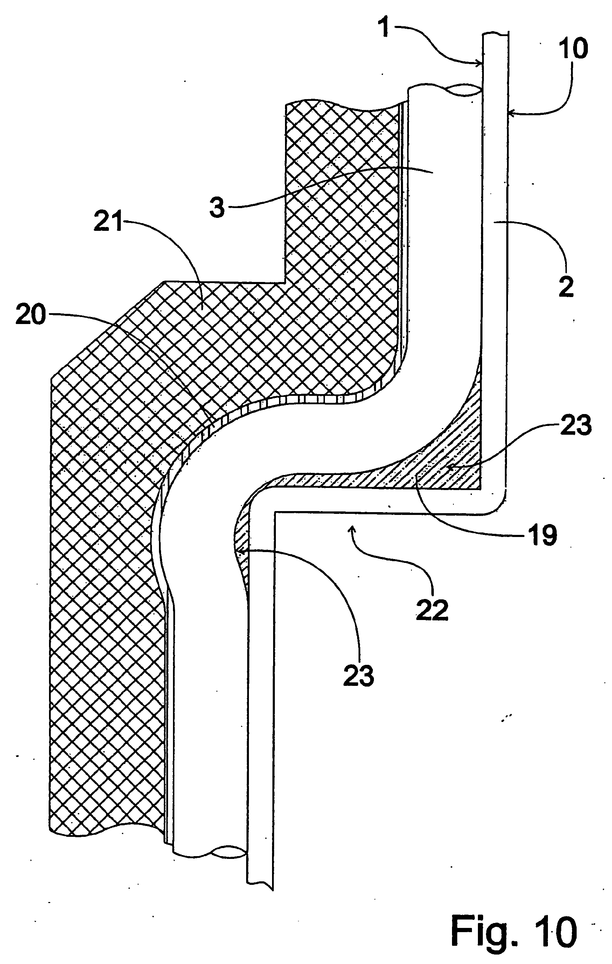

Fig. 10 zeigt die Anordnung gemäß Fig. 9, bei der zum thermischen Isolieren die Anordnung aus mit der Deckschicht 20 belegten Formschale 2 und Rohr 3 beziehungsweise Rohren 3 einer Isolationsschicht 21 aus aluminiumkaschierter Steinwolle ausgestattet ist.

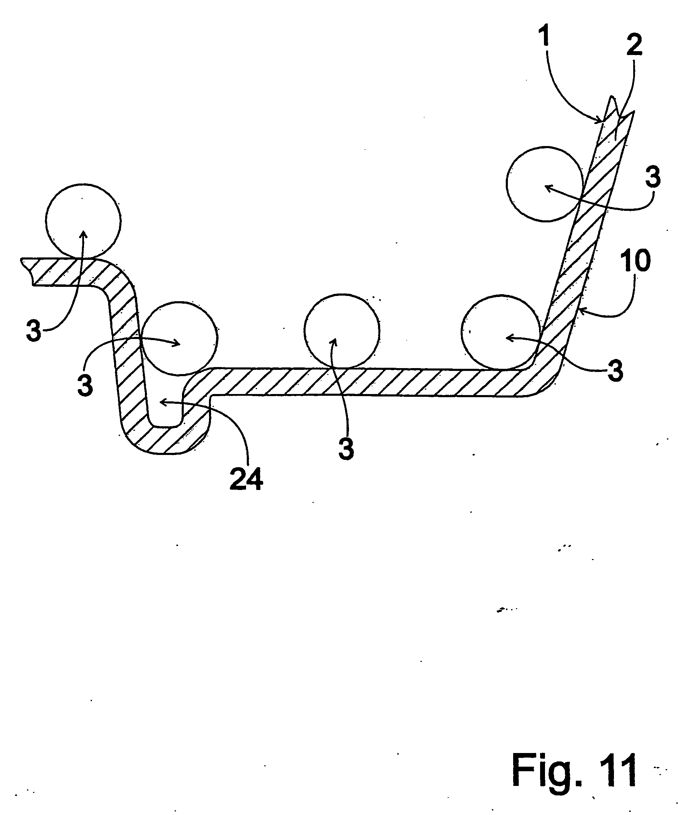

Fig. 11 zeigt in einer ausschnittsweisen geschnittenen Seitenansicht eine Formschale 2, auf deren einer Formseite 10 gegenüberliegenden Rückseite 1 eine Anzahl von zweckmäßgerweise als Wellrohre ausgebildete Rohre 3 wenigstens eines Leitungssystems, vorzugsweise von wenigstens entsprechend der Ausgestaltung gemäß Fig. 1 und Fig. 2 im Gegenstrom betriebenen zwei Leitungssystemen mit alternierenden Rohren 3, angeordnet sind. Die Rohre 3 sind durch in Fig. 11 nicht dargestellte, entsprechend den Klemmmitteln 11 bei dem Ausführungsbeispiel gemäß Fig. 3 bis Fig. 6 durch mechanische Klemmung wirkende Klemmmittel an der Formschale 2 befestigt. Die Formschale 2 weist in der Ausgestaltung gemäß Fig. 11 eine Rippennut 24 mit einer Breite auf, die kleiner als der Durchmesser eines an der offenen Seite der Rippennut 24 angeordneten Rohrs 3 ist.

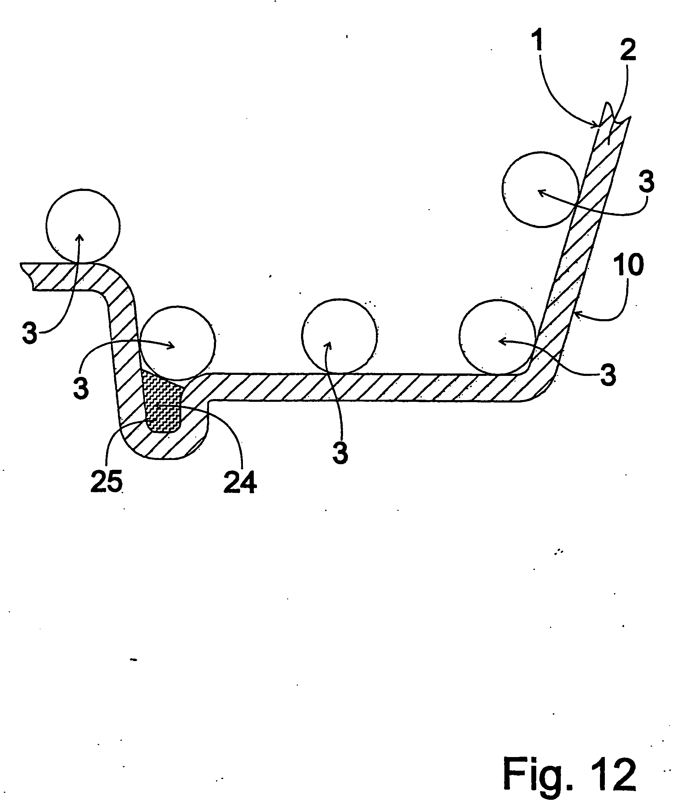

Fig. 12 zeigt die Anordnung von Formschale 2 und Rohren 3 gemäß Fig. 11, wobei nach Vorbehandlungsschritten entsprechend den vorangehend erläuterten Ausführungsbeispielen in die Rippennut 24 eine weitere Füllmasse 25 eingebracht ist. Die weitere Füllmasse 25 weist die gleichen Komponenten wie die Füllmasse 19 entsprechend den vorangehend erläuterten Ausführungsbeispielen auf, wobei jedoch bei der weiteren Füllmasse 25 zum Erhöhen der Wärmeleitfähigkeit auf Kosten der Verformbarkeit der Anteil der Aluminiumteilchen bei mehr als 30 Gewichtsprozent, vorzugsweise zwischen etwa 35 Gewichtsprozent und 45 Gewichtsprozent, liegt. Dadurch ist das Ausbilden einer Wärmesenke im Bereich der Rippennut 24 weitgehend eliminiert.

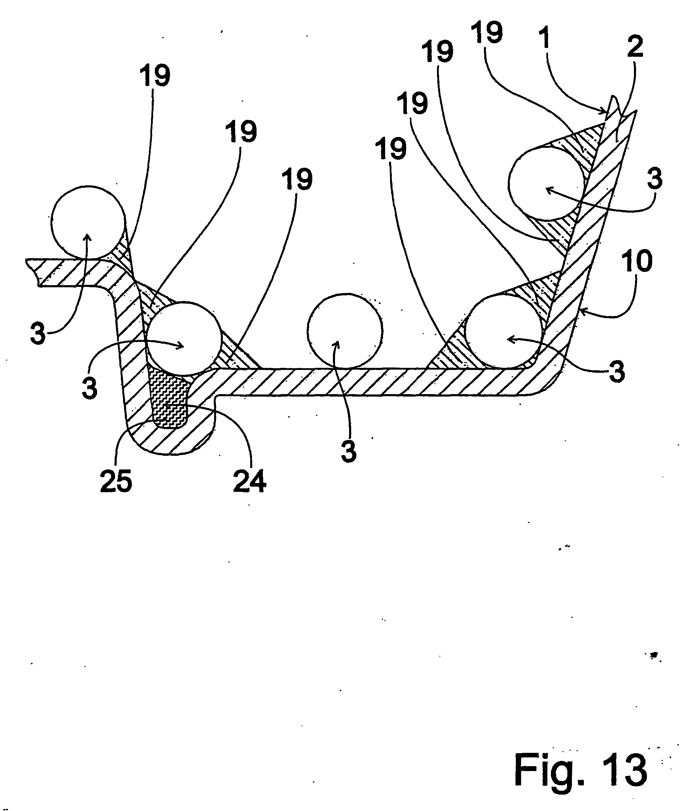

Fig. 13 zeigt die Anordnung gemäß Fig. 12 mit entsprechender Anordnung gemäß Fig. 4 an gegenüber der Vertikalen abfallenden Bereichen der Rohre 3 böschungsartig zwischen den Rohren 3 und der Rückseite 1 der Formschale 2 eingebrachten Füllmassen 19 mit einer Zusammensetzung entsprechend den vorangehend erläuterten Füllmassen 19 bei den Ausführungsbeispielen gemäß Fig. 3 bis Fig. 10.

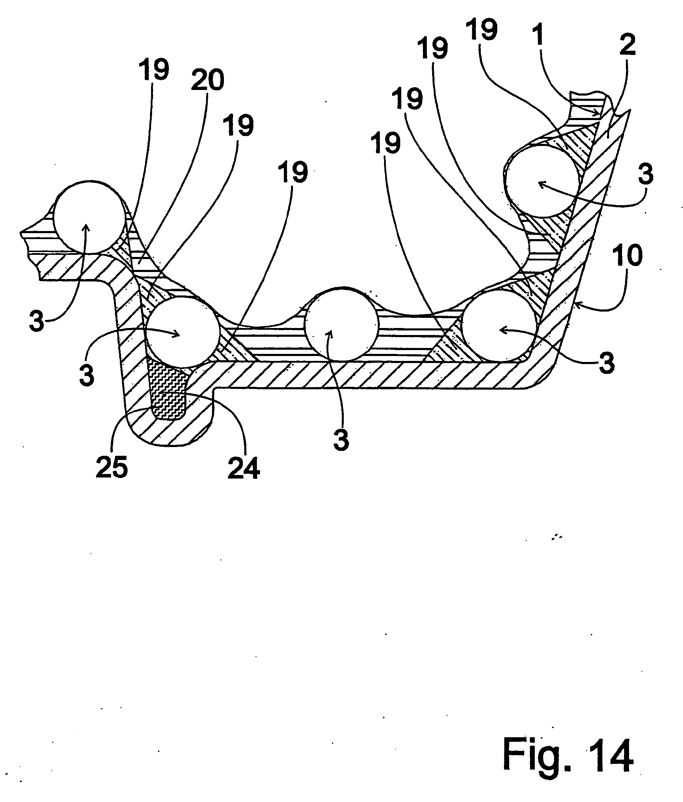

Fig. 14 zeigt die Anordnung gemäß Fig. 13 mit einer über die Rück-seite 1 der Formschale 2, über die Rohre 3 und über die Füllmassen 19 aufgetragenen Deckschicht 20 mit einer Zusammensetzung entsprechend den Ausführungsbeispielen gemäß Fig. 3 bis Fig. 10 zum Fertigstellen einer weiteren erfindungsgemäßen Formschalenanordnung mit den vorangehend erläuterten Vorteilen.

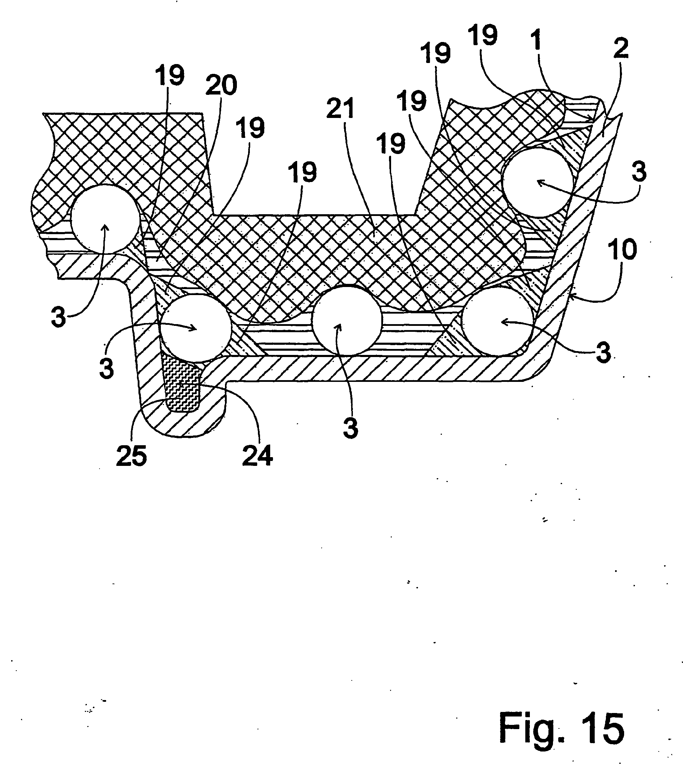

Fig. 15 zeigt die Anordnung gemäß Fig. 14, bei der entsprechend dem vorangehend erläuterten Ausführungsbeispielen eine Isolationsschicht 21 aus aluminiumkaschierter Steinwolle über der Deckschicht 20 zur thermischen Isolierung angeordnet ist.

## Patentansprüche

1. Formschalenanordnung mit einer Formschale (2), die eine Formseite (10) und eine der Formseite (10) gegenüberliegende Rückseite (1) aufweist, an der mit Klemmmitteln (11) eine Anzahl von Rohren (3) wenigstens eines Leitungssystems (4, 5, 6, 7) zum Temperieren der Formschale (2) angebracht ist, wobei über den Rohren (3) sowie über frei liegenden Bereichen der Rückseite (1) als Material eine gegenüber dem Querschnitt der Rohre (3) dünne Deckschicht (20) liegt, **dadurch gekennzeichnet, dass** die Deckschicht (20) aus einen Silikonkautschuk und Metallteilchen mit einem Anteil von höchstens 5 Gewichtsprozent gebildet ist.

2. Formschalenanordnung nach Anspruch 1, **dadurch gekennzeichnet, dass** die Teilchengröße der in der Deckschicht (20) vorhanden Metallteilchen zwischen etwa 400 Mikrometer und etwa 800 Mikrometer liegt.

3. Formschalenanordnung nach Anspruch 1 oder Anspruch 2, **dadurch gekennzeichnet, dass** bei einer Anzahl von Rohren (3) wenigstens einseitig eine bei Aufbringen gegen die Wirkung der Schwerkraft formstabile knetartige Füllmasse (19) zwischen dem betreffenden Rohr (3) und der Rückseite (1) vorhanden ist.

4. Formschalenanordnung nach einem der Ansprüche 1 bis 3, **dadurch gekennzeichnet, dass** in gegenüber den Rohren (3) vertieften Bereichen (24) der Rückseite (1) eine weitere Füllmasse (25) vorhanden ist.

5. Formschalenanordnung nach Anspruch 3 oder Anspruch 4, **dadurch gekennzeichnet, dass** die oder jede Füllmasse (19, 25) Metallteilchen aufweist.

6. Formschalenanordnung nach Anspruch 5, **dadurch gekennzeichnet, dass** der Anteil der in einer Füllmasse (19, 25) vorhandener Metallteilchen zwischen 25 Gewichtsprozent und 45 Gewichtsprozent liegt.

7. Formschalenanordnung nach einem der Ansprüche 1 bis 6, **dadurch gekennzeichnet, dass** auf der von der Rückseite (1) abgewandten Seite der Deckschicht (20) eine Isolationsschicht (21) mit einer gegenüber dem Durchmesser der Rohre (3) größeren Dicke vorhanden ist.

8. Formschalenanordnung nach einem der Ansprüche 1 bis 7, **dadurch gekennzeichnet, dass** die Klemmmittel (11) jeweils einen Nagel (22), der mit einem Kopf (14) an der Rückseite (1) angebracht ist, und eine Schelle (13) aufweisen, wobei die Schelle (13) um ein Rohr (3) gelegt ist und wobei ein Schaft (16) des Nagels (12) um die Schelle (13) herum gekrümmt angeordnet ist.

9. Formschalenanordnung nach einem der Ansprüche 1 bis 8, **dadurch gekennzeichnet, dass** wenigstens zwei Leitungssysteme (4, 5, 6, 7) mit alternierend nebeneinander liegenden Rohren (3) vorhanden sind.

10. Formschalenanordnung nach einem der Ansprüche 1 bis 9, **dadurch gekennzeichnet, dass** die Rohre (3) des oder jedes Leitungssystems (4, 5, 6, 7) randseitig über die Formschale (2) überstehen und mit um 180 Grad gekrümmten Umlenkbögen miteinander verbunden sind.

11. Formschalenanordnung nach Anspruch 10, **dadurch gekennzeichnet, dass** die Umlenkbögen (8) jeweils eine Verbindungsmuffe (9) aufweisen.

12. Formschalenanordnung nach einem der Ansprüche 1 bis 11, **dadurch gekennzeichnet, dass** die Rohre (3) als biegsame Wellrohre ausgebildet sind.

## Claims

1. Mould arrangement having a mould (2) which has a moulding face (10) and a rear face (1), opposite from the moulding face (10), on which are mounted, by clamping means (11), a plurality of pipes (3) forming at least one piping system (4, 5, 6, 7) for controlling the temperature of the mould (2), there being situated above the pipes (3) and above exposed regions of the rear face (1), as a material, a covering layer (20) which is thin in comparison with the cross-section of the pipes (3), **characterised in that** the covering layer (20) is formed by a silicone rubber and by metal particles in a proportion of not more than 5% by weight.

2. Mould arrangement according to claim 1, **characterised in that** the size of the metal particles present in the covering layer (20) is between approximately 400 micrometres and approximately 800 micrometres.

3. Mould arrangement according to claim 1 or claim 2, **characterised in that**, when there are a plurality of pipes (3), there is present between the pipe (3) concerned and the rear face (1), on at least one side, a kneadable filler material (19) which, when applied, remains in a stable shape when acted on by gravity.

4. Mould arrangement according to one of claims 1 to 3, **characterised in that** a further filler material (25) is present in regions (24) of the rear face (1) which are depressed relative to the pipes (3).

5. Mould arrangement according to claim 3 or claim 4, **characterised in that** the or each filler material (19, 25) contains metal particles.

6. Mould arrangement according to claim 5, **characterised in that** the proportion of metal particles present in a filler material (19, 25) is between 25% by weight and 45% by weight.

7. Mould arrangement according to one of claims 1 to 6, **characterised in that** an insulating layer (21) of a thickness greater than the diameter of the pipes (3) is present on the side of the covering layer (20) remote from the rear face (1).

8. Mould arrangement according to one of claims 1 to 7, **characterised in that** the clamping means (11) each have a nail (22), which is attached to the rear face (1) by a head (14), and a clip (13), the clip (13) fitting around a pipe (3) and the shank (16) of the nail (12) being arranged to curve around the clip (13).

9. Mould arrangement according to one of claims 1 to 8, **characterised in that** at least two piping systems (4, 5, 6, 7) are present whose pipes (3) are situated next to one another in an alternating arrangement.

10. Mould arrangement according to one of claims 1 to 9, **characterised in that** the pipes (3) of the or each piping system (4, 5, 6, 7) project beyond the mould (2) at edges and are connected together by direction-changing curves which curve through 180°.

11. Mould arrangement according to claim 10, **characterised in that** the direction-changing curves (8) each have a connecting union (9).

12. Mould arrangement according to one of claims 1 to 11, **characterised in that** the pipes (3) take the form of flexible corrugated pipes.

## Revendications

1. Agencement de coque de moulage ayant une coque de moule (2) qui présente un côté moule (10) et, opposé à ce côté moule (10), un côté arrière auquel nombre de tubes (3) d'au moins un système de conduites (4,5,6,7) sont reliés à l'aide de moyens de serrage (11) pour régler la température de la coque de moule (2), dans lequel une couche mince de revêtement (20) s'étend, en tant que matériau, en relation avec la section transversale des tubes (3), sur ces tubes (3) et sur des zones du côté arrière (1) s'étendant librement, **caractérisé en ce que** la couche de revêtement (20) est formée d'un caoutchouc de silicone et de particules métalliques à raison de 5% en poids au maximum.

2. Agencement de coque de moulage selon la revendication 1, **caractérisé en ce que** la taille des particules présentes dans la couche de revêtement (20) est comprise entre environ 400 micromètres et environ 800 micromètres.

3. Agencement de coque selon la revendication 1 ou la revendication 2, **caractérisé en ce qu'**une masse de remplissage (19), malléable lors de son application et rigide vis-à-vis de l'action de la pesanteur, est présente entre le tube (3) concerné et le côté arrière (1) au moins sur un côté, sur nombre de tubes (3).

4. Agencement de coque de moulage selon l'une des revendications 1 à 3, **caractérisé en ce que** une masse de remplissage supplémentaire (25) est présente dans des zones creuses (24) en relation avec les tubes (3) du côté arrière (1).

5. Agencement de coque selon la revendication 3 ou 4, **caractérisé en ce que** la ou les masse(s) de remplissage (19,25) comporte des particules métalliques.

6. Agencement de coque de moulage selon la revendication 5, **caractérisé en ce que** la proportion de particules métalliques présentes dans une masse de remplissage (19,25) est comprise entre 25 et 45% en poids.

7. Agencement de coque de moulage selon l'une des revendications 1 à 6, **caractérisé en ce qu'**une couche isolante (21) est présente sur le côté de couche de revêtement (20) opposé au côté arrière (1), avec une épaisseur plus importante que le diamètre des tubes (3).

8. Agencement de coque de moulage selon l'une des revendications 1 à 7, **caractérisé en ce que** les moyens de serrage (11) comportent à chaque fois une broche (22), qui est reliée par une tête (14) au côté arrière (1) et un collier (13), ce collier (13) étant disposé autour d'un tube (3) et une barre (16) de la broche (22) étant disposée de manière recourbée autour du collier (13).

9. Agencement de coque de moule selon l'une des revendications 1 à 8, **caractérisé en ce qu'**au moins deux systèmes de conduites (4,5,6,7) sont prévus avec des tubes (3) s'étendant de manière alternée les uns à côté des autres.

10. Agencement de coque de moulage selon l'une des revendications 1 à 9, **caractérisé en ce que** les tubes (3) du ou de chaque système de conduites (4,5,6,7) font saillie par rapport à la coque de moulage (2) et sont reliés ensemble au moyen d'un arc de courbure de 180 degrés.

11. Agence de coque de moulage selon la revendication 10, **caractérisé en ce que** les arcs de courbure (8) comportent chacun un manchon de raccordement (9).

12. Agencement de coque de moulage selon l'une des revendications 1 à 11, **caractérisé en ce que** les tubes (3) se présentent sous la forme de tube annelés flexibles.
